(19) Europäisches Patentamt
European Patent Office
Office européen des brevets

(11) **EP 3 964 702 A1**

(12) **EUROPÄISCHE PATENTANMELDUNG**

(43) Veröffentlichungstag:
**09.03.2022 Patentblatt 2022/10**

(21) Anmeldenummer: **21195318.7**

(22) Anmeldetag: **07.09.2021**

(51) Internationale Patentklassifikation (IPC):
*F02D 13/02* *(2006.01)*     *F02D 37/02* *(2006.01)*
*F02D 41/02* *(2006.01)*     *F02D 41/14* *(2006.01)*
*F02D 41/24* *(2006.01)*

(52) Gemeinsame Patentklassifikation (CPC):
**F02D 41/1406; F02D 13/02; F02D 37/02;**
**F02D 41/024; F02D 41/2432**

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(30) Priorität: **08.09.2020 DE 102020123353**

(71) Anmelder: **IAV GmbH**
**Ingenieurgesellschaft Auto und Verkehr**
**10587 Berlin (DE)**

(72) Erfinder:
• **Dr. Schrödinger, Christina**
  **38102 Braunschweig (DE)**

• **Dr. Fiege, Sabrina**
  **38550 Isenbüttel (DE)**
• **Frank, Benjamin**
  **29353 Ahnsbeck (DE)**
• **Kies, Tobias**
  **31275 Lehrte (DE)**
• **Scheffer, Norbert**
  **31188 Holle (DE)**
• **Schori, Markus**
  **38124 Braunschweig (DE)**
• **Prof. Dr. Gottschalk, Wolfram**
  **39122 Magdeburg (DE)**

(74) Vertreter: **Fukala, Georg**
**IAV GmbH**
**Ingenieurgesellschaft Auto und Verkehr**
**Entwicklungszentrum Chemnitz/Stollberg**
**Auer Straße 54**
**09366 Stollberg (DE)**

(54) **VERFAHREN UND VORRICHTUNG ZUR OPTIMIERUNG DER ABGASNACHBEHANDLUNG EINER BRENNKRAFTMASCHINE**

(57) Es ist Aufgabe der vorliegenden Erfindung, die Optimierung der Abgasnachbehandlung einer Brennkraftmaschine zu verbessern. Erfindungsgemäß von Vorteil ist es, dass alle relevanten Parameter experimentell einbezogen werden und sodann vorliegende Messergebnisse einer durchgängigen analytischen Methodik unterzogen werden, um eine Bewertung hinsichtlich der Auflösung des Zielkonflikts Aufheizung vs. Rohemissionen vornehmen zu können. Demzufolge kann somit ein klares Parameteroptimum in die Parametrierung der Motorsteuergerätefunktionen überführt werden. Außerdem werden stationär gewonnene Ergebnisse der Parametervariation(en) einer Bewertung hinsichtlich der transienten Überführbarkeit unterzogen. Zusammengefasst ist die erfindungsgemäße Methode aus motorischer Sicht ganzheitlich, d. h. die gewonnenen Ergebnisse und die daraus abgeleiteten Parameter der Motorsteuerung verkörpern belastbar die erreichbaren Optima im Motorbetrieb. Sämtliche relevanten Parameter werden experimentell einbezogen und über ihren spezifischen Einfluss auf die motorischen Ergebnisse ausgewertet. Hinzu kommt eine analytische und nachvollziehbare Auflösung des Zielkonflikts von Aufheizung vs. Rohemissionen.

EP 3 964 702 A1

**Beschreibung**

Die vorliegende Erfindung betrifft ein Verfahren und eine Vorrichtung zur Optimierung der Abgasnachbehandlung einer Brennkraftmaschine mit den Merkmalen gemäß den Patentansprüchen.

Wie allgemein bekannt, werden für einen möglichst emissionsarmen Betrieb von Verbrennungsmotoren Maßnahmen zum Aufheizen des Katalysators getroffen, siehe zum Beispiel DE 43 25 503 C1, DE 10 2004 016 386 B4, DE 10 2005 006 490 B4 oder DE 10 2005 015 999 A1. Wichtig hierbei ist die Parametrierung eines solchen Katalysatorheizens. Mit dem Ziel, nach dem Start einer Brennkraftmaschine einen maximal vertretbaren Abgaswärmestrom auf die Komponenten der Abgasnachbehandlung, wie Katalysatoren und Filter zu leiten, wird insbesondere bei sehr später Phasenlage der Energieumsetzung ein möglichst großer Massenstrom an Abgas erzeugt. Zur Optimierung des Zielkonflikts von schneller Aufheizung, d. h. Aktivierung der Abgasnachbehandlung und den bis dahin nicht oder kaum konvertierten Rohemissionen werden bisher zwar alle relevanten thermodynamischen Parameter genutzt, die an modernen Verbrennungsmotoren mit elektronischer Motorsteuerung verfügbar sind. Die wesentlichen Parameter sind hier neben dem Verbrennungstrigger, bei Ottomotoren der Zündzeitpunkt, die variablen Ventilsteuerzeiten, der Kraftstoffeinspritzdruck, d. h. Raildruck bei Common-Rail-Systemen, das Einspritzmuster in Timing und Massenaufteilung sowie das Luftverhältnis. Die Bewertung der motorischen Ergebnisse und ihre Umsetzung in eine Parametrierung der Motorsteuergerätefunktionen unterliegt jedoch allgemein keiner durchgängigen analytischen Methodik.

Es ist daher Aufgabe der vorliegenden Erfindung, die Optimierung der Abgasnachbehandlung einer Brennkraftmaschine zu verbessern.

Diese Aufgabe wird erfindungsgemäß mittels eines Verfahrens und einer Vorrichtung mit den Merkmalen gemäß den Patentansprüchen gelöst.

Erfindungsgemäß von Vorteil ist es, dass alle relevanten Parameter experimentell einbezogen werden und sodann vorliegende Messergebnisse einer durchgängigen analytischen Methodik unterzogen werden, um eine Bewertung hinsichtlich der Auflösung des Zielkonflikts Aufheizung vs. Rohemissionen vornehmen zu können. Demzufolge kann somit ein klares Parameteroptimum in die Parametrierung der Motorsteuergerätefunktionen überführt werden. Außerdem werden stationär gewonnene Ergebnisse der Parametervariation(en) einer Bewertung hinsichtlich der transienten Überführbarkeit unterzogen. Zusammengefasst ist die erfindungsgemäße Methode aus motorischer Sicht ganzheitlich, d. h. die gewonnenen Ergebnisse und die daraus abgeleiteten Parameter der Motorsteuerung verkörpern belastbar die erreichbaren Optima im Motorbetrieb. Sämtliche relevanten Parameter werden experimentell einbezogen und über ihren spezifischen Einfluss auf die motorischen Ergebnisse ausgewertet. Hinzu kommt eine analytische und nachvollziehbare Auflösung des Zielkonflikts von Aufheizung vs. Rohemissionen. Bei Veränderung der jeweiligen Optimierungsaufgabe kann auf Basis der identischen Messergebnisse eine neue Berechnung mit einem angepassten Ranking-Schlüssel durchgeführt werden, womit keine weiteren aufwendigen Messungen, insbesondere an einem Prüfstand, durchgeführt werden müssen. Weiterhin werden ebenfalls analytisch nachvollziehbar die dynamischen Grenzen der transienten Überführung eines optimalen Parametersatzes in einen anderen optimalen Parametersatz bei Betriebspunktwechsel berücksichtigt. Somit ist zu erwarten, dass der Korrekturbedarf bei den Parametern in der Motorsteuerung nach dynamischen Tests lediglich minimal ist und somit ebenfalls die Aufwendungen reduziert. Die auf Algorithmen basierende Inter- und Extrapolation der Sollwertkennfelder sowie deren automatisierter Export minimiert das Fehlerrisiko bei der Überführung der experimentellen Erkenntnisse in die Parametrierung der Motorsteuerung.

Weitere vorteilhafte Ausgestaltungen der vorliegenden Erfindung sind dem nachfolgenden Ausführungsbeispiel sowie den abhängigen Patentansprüchen zu entnehmen.

Eine insbesondere zum Antrieb eines Fahrzeuges vorgesehene Brennkraftmaschine ist wie allgemein bekannt mit einem System zu Steuerung und/oder Regelung (ECU, Steuergerät) wirkverbunden. Bei der Brennkraftmaschine handelt es sich insbesondere um einen Ottomotor mit einer Fremdzündung. Die Steuerzeiten der Brennkraftmaschine sind variabel, d. h. das Öffnen und Schließen von Ladungswechselventilen ist in definierten Grenzen einstellbar. Insbesondere kann somit eine so genannte Einlass- und Auslassphasenstellung verändert werden. Außerdem ist der Zündzeitpunkt variabel verstellbar. Eine Steuerung der Ladungswechselventile bzw. der Einlass- und Auslassphasenstellung erfolgt betriebspunktabhängig auf Grundlage von Sollkennfeldern. Zum Beispiel kann somit in einem ersten Betriebspunkt eine Einlass- und Auslassphasenstellung derart eingestellt werden, dass die Auslassventile noch geöffnet sind, wenn die Einlassventile öffnen. Die Brennkraftmaschine weist weiterhin eine Abgasanlage mit einem oder mehreren darin angeordneten Katalysator(en) und/oder (Partikel-)Filter(n) auf, so dass deren Abgase gereinigt werden können.

Erfindungsgemäß wird die Brennkraftmaschine zunächst im Rahmen eines Experiments, zum Beispiel an einem Prüfstand, in einem ersten Betriebspunkt betrieben. Dabei erfolgt eine geeignete Kühlung der Brennkraftmaschine, so dass zum Beispiel das Kühlmittel und das Schmiermittel der Brennkraftmaschine (bzw. die Abgasanlage und der Katalysator) zunächst eine Temperatur von 20 Grad Celsius aufweist (aufweisen). Ebenfalls kann die Ansaugluft der Brennkraftmaschine zur Einstellung repräsentativer Operationsbedingungen thermisch konditioniert werden. Der erste Betriebspunkt ist durch eine erste Drehzahl und eine erste Last (Drehmoment) gekennzeichnet. Auf diese Weise erfolgt die Simulation eines Kaltstarts der Brennkraftmaschine.

Während dieses Kaltstarts und im weiteren Verlauf erfolgt an bzw. in diesem ersten Betriebspunkt für eine erste Einlass- und Auslassphasenstellung und einen ersten Zündzeitpunkt eine Bestimmung bzw. messtechnische Erfassung der Zusammensetzung des Abgases der Brennkraftmaschine, insbesondere der Konzentration der einzelnen Bestandteile (CO, HC, NOx und nach Aufgabe weitere beliebige Emissionskomponenten) des Abgases (also der Abgasemissionen) stromauf- und stromabwärts des Katalysators in der Abgasanlage. Außerdem wird zumindest eine Temperatur des Abgases im ersten Betriebspunkt erfasst. Bevorzugt erfolgt eine Erfassung der Temperatur des Abgases am Auslass und der Temperatur des Katalysators. Die Brennkraftmaschine wird auf diese Weise zumindest so lange betrieben und es erfolgt eine Erfassung bzw. Aufzeichnung der genannten Größen (Abgaszusammensetzung, Temperaturen), bis der Katalysator eine bestimmte Temperatur erreicht hat, insbesondere die Temperatur, ab der der Katalysator aktiv ist (Light-Off), insbesondere durch Betrachtung der Zusammensetzung des Abgases stromauf- und stromab des Katalysators. Somit kann u. a. anhand des Abgasmassenstroms und der Temperatur des Abgases bestimmt werden, welcher Wärme(mengen)strom im ersten Betriebspunkt bei den genannten Randbedingungen (erste Einlass- und Auslassphasenstellung, erster Zündzeitpunkt) bereitsteht bzw. wie groß die Wärmemenge (des Abgases) je Zeiteinheit ist, welche auf die Abgasanlage und der Katalysator einwirkt und eine Temperaturänderung dieser Bauteile verursacht, siehe hierzu konkreter Angaben im weiteren Verlauf der Beschreibung. Zusätzlich kann im Experiment eine Erfassung und Aufzeichnung der Zylinderinnendrücke der Brennkraftmaschine erfolgen mit dem Ziel, die Stabilität der Energieumsetzung, d.h. die Laufunruhe und das Aussetzerverhalten zu ermitteln und beurteilbar zu machen.

In diesem ersten Betriebspunkt erfolgt dann für die erste Einlass- und Auslassphasenstellung eine solche, also wie eben beschriebene Bestimmung/Erfassung der genannten Größen jeweils bei einem zweiten, dritten Zündzeitpunkt und bei noch weiteren Zündzeitpunkten, wobei stets die genannten Ausgangsbedingungen wiederhergestellt werden (Kühlmittel, Abgasanlage und Katalysator weisen eine Temperatur von 20 Grad Celsius auf), so dass der Einfluss des Zündzeitpunktes analysiert werden kann.

Dieses Vorgehen erfolgt dann im ersten Betriebspunkt auch für eine zweite Einlass- und Auslassphasenstellung, also insbesondere die Variation des Zündzeitpunktes, ausgehend von den genannten Ausgangsbedingungen hinsichtlich der Temperaturen, bei Messung/Erfassung der genannten Größen.

So wird im noch weiteren Verlauf des Experiments auch an einem zweiten und an noch weiteren Betriebspunkten der Brennkraftmaschine verfahren, so dass eine umfangreiche Datenbasis für eine weitere Verarbeitung gebildet wird bzw. bereitsteht. Dabei kann auch ein Betriebspunkt der Brennkraftmaschine berücksichtigt werden, der dem Leerlauf der Brennkraftmaschine entspricht, wobei das von der Brennkraftmaschine nach außen bereitgestellte Drehmoment somit Null ist, dass die Brennkraftmaschine lediglich lastlos mit einer konstanten Drehzahl betrieben wird.

Zusammengefasst werden auf diese Weise relevante Betriebspunkte der Brennkraftmaschine analysiert, welche im realen Betrieb der Brennkraftmaschine, also nicht in einem Experiment, sondern in einer Serienanwendung, zum Aufwärmen des Katalysators ("Katalysatorheizen") geeignet sind, wobei eine Variation von ("Parametern") Einlass- und Auslassphasenstellung bzw. Steuerzeiten der Einlass- und Auslassventile und des Zündzeitpunktes (d. h. eine "Parametervariation") erfolgt und relevante Messgrößen aufgezeichnet werden, also jeder Kombination von Parametern relevante Messgrößen zugeordnet sind.

Aufbauend auf diesem Experiment bzw. einer solchen Analyse ist es insbesondere Ziel, eine Grundlage zur Steuerung der Steuerzeiten der Einlass- und Auslassnockenwelle und des Zündzeitpunktes zu gewinnen, d. h. so genannte Sollwert-Kennfelder mit geeigneten Daten für eine Serienanwendung zu versehen.

Dazu wird anhand der aus dem Experiment bereitstehenden Daten erfindungsgemäß wie im weiteren Verlauf beschrieben verfahren.

Wie schon angedeutet, kann anhand des Abgasmassenstroms und der Temperatur des Abgases bestimmt werden, welcher Wärme(mengen)strom $dQ/dt_{ABG}$ im jeweiligen Betriebspunkt bei den genannten Randbedingungen (erste Einlass- und Auslassphasenstellung ENW/ANW, erster Zündzeitpunkt ZZP usw.) bereitsteht bzw. wie groß die Wärmemenge (des Abgases) je Zeiteinheit ist, welche auf die Abgasanlage und den Katalysator einwirkt und eine Temperaturänderung bzw. eine chemische Aktivierung dieser Bauteile verursacht. D. h. auf Basis der Vielzahl von Parameterkombinationen und der jeweils zugeordneten Messgrößen wird für jede Parameterkombination die Wärmemenge $Q_{LO}$ bestimmt, welche erforderlich ist, um den Katalysator zu aktivieren, also insbesondere dem Katalysator so viel Wärme zuzuführen, dass dieser seine spezifische Light-Off-Temperatur erreicht, also im Abgas enthaltene Schadstoffe z. B. zu 50 % in unschädliche Bestandteile konvertiert werden, natürlich kann auch eine andere, insbesondere höhere Temperatur des Katalysators in Betracht gezogen werden, z. B. eine Temperatur, ab der 80% oder mehr Prozent der Schadstoffe konvertiert werden.

Erfindungsgemäß erfolgt nunmehr bzw. im weiteren Verlauf für die einzelnen Parameterkombinationen eines Betriebspunktes der Brennkraftmaschine eine Bestimmung bzw. Berechnung der Zeit $t_{KH}$, welche vom Start der Brennkraftmaschine bis zur Erreichung der Light-Off-Temperatur vergeht anhand der zuvor bestimmten Wärmemenge $Q_{LO}$, welche erforderlich ist, um den Katalysator zu aktivieren, und dem Wärmestrom $dQ/dt_{ABG}$ bei den jeweiligen Randbedingungen, siehe auch Gleichung 1:

$$t_{KH} = Q_{LO}(dQ/dt_{ABG}) / dQ/dt_{ABG}(ENW, ANW, ZZP). \tag{1}$$

Darüber hinaus erfolgt für die einzelnen Parameterkombinationen (je Betriebspunkt der Brennkraftmaschine) eine Bestimmung der (realen) tatsächlichen (emittierten) Gesamtmasse einzelner Bestandteile (CO, HC, NOx und nach Aufgabe weitere beliebige Emissionskomponenten) des Abgases stromauf- bzw. stromabwärts des Katalysators während der gemäß Gleichung 1 berechneten Zeit $t_{KH}$, welche vom Start der Brennkraftmaschine bis zur Erreichung der Light-Off-Temperatur vergeht, d. h. in der Zeitspanne, in der der Katalysator noch nicht aktiv ist und die Masse der Bestandteile (CO, HC, NOx und nach Aufgabe weitere beliebige Emissionskomponenten) des Abgases stromauf- bzw. stromabwärts des Katalysators übereinstimmt bzw. im Wesentlichen übereinstimmt und zwar als Grundlage für einen (bewertenden) Vergleich, d. h. ein Ranking hinsichtlich der einzelnen Bestandteile des Abgases, welche während des Aufheizens des Katalysators (bei einer spezifischen Parameterkombination) gebildet bzw. an die Umgebung abgegeben werden.

Die Bestimmung der (realen) tatsächlich an die Umwelt abgegebenen (emittierten) Masse $m_{ABG, real, KH}$ einzelner Bestandteile (CO, HC, NOx und nach Aufgabe weitere beliebige Emissionskomponenten) des Abgases stromauf- bzw. stromabwärts des Katalysators während der gemäß Gleichung 1 berechneten Zeit $t_{KH}$ für jede Parameterkombination (je Betriebspunkt der Brennkraftmaschine) erfolgt anhand des im Rahmen des oben genannten Experiments ermittelten Abgasmassenstroms des jeweiligen Abgasbestandteils (CO, HC, NOx und nach Aufgabe weitere beliebige Emissionskomponenten) $dm_{ABG}/dt$ und zwar anhand Gleichung 2:

$$m_{ABG, real, KH} = dm_{ABG}/dt * t_{KH}. \tag{2}$$

Hierbei erfolgt erfindungsgemäß, in Hinblick auf ein Ranking hinsichtlich der einzelnen Bestandteile des Abgases, welche während des Aufheizens des Katalysators emittiert werden, die Berücksichtigung eines Engineering-Goals, also eines Zielwerts, der im Rahmen der Entwicklung in Bezug auf die Bestandteile des Abgases zu erreichen ist und zwar anhand eines Prozentwertes des zu erreichenden gesetzlich vorgegebenen Abgasgrenzwertes (in g/km), also beispielsweise beträgt das Engineering-Goal 50% dieses Grenzwertes, wobei zunächst gemäß Gleichung 3 ein Norm-Abgasmassenstrom $dm_{ABG, Norm}/dt$ der einzelnen Bestandteile des Abgases in Abhängigkeit der beim jeweiligen Abgastest zurückgelegten Wegstrecke $Länge_{Abgastest}$ und der dabei vergehenden Zeit $Zeit_{Abgastest}$ gebildet wird:

$$dm_{ABG, Norm}/dt = Grenzwert_{ABG}(g/km) * Länge_{Abgastest}(km) / Zeit_{Abgastest}(s), \tag{3}$$

so dass gemäß Gleichung 4 ein Ziel-Abgasmassenstrom $dm_{ABG, Ziel}/dt$ der einzelnen Bestandteile des Abgases gebildet werden kann:

$$dm_{ABG, Ziel}/dt = dm_{ABG, Norm}/dt * Engineering\text{-}Goal\ (\%) \tag{4}$$

sowie bezogen auf die Zeit $t_{KH}$, welche vom Start der Brennkraftmaschine bis zur Erreichung der Light-Off-Temperatur vergeht und bezogen auf einen zulässigen Anteil $x_{KH}$ (%) der insgesamt emittierten Masse der einzelnen Bestandteile des Abgases während des Aufheizens des Katalysators, beispielsweise darf dieser Anteil nicht mehr als 30% der Masse der einzelnen Bestandteile des Abgases an der während eines gesetzlich vorgegebenen Abgastests emittierten Masse der einzelnen Bestandteile des Abgases betragen, eine Ziel-Abgasmasse der einzelnen Bestandteile des Abgases $m_{ABG, Ziel, KH}$ gemäß Gleichung 5, gebildet werden kann:

$$m_{ABG, Ziel, KH} = dm_{ABG, Ziel}/dt * t_{KH} * x_{KH}\ (\%). \tag{5}$$

Im Ergebnis stehen somit gemäß Gleichung 2 die (reale) tatsächliche Masse $m_{ABG, real, KH}$ einzelner Bestandteile (CO, HC, NOx und nach Aufgabe weitere beliebige Emissionskomponenten) des Abgases je Parameterkombination (für jeden untersuchten Betriebspunkt) und gemäß Gleichung 5 die Ziel-Abgasmasse $m_{ABG, Ziel, KH}$ der einzelnen Bestandteile (CO, HC, NOx und nach Aufgabe weitere beliebige Emissionskomponenten) des Abgases je Parameterkombination für einen (bewertenden) Vergleich, d. h. ein Ranking hinsichtlich der einzelnen Bestandteile des Abgases, welche während des Aufheizens des Katalysators (bei einer spezifischen Parameterkombination) gebildet bzw. an die Umgebung abgegeben werden, bereit.

Dieses Ranking ("Emissions-Ranking") erfolgt für jeden einzelnen (betrachteten) Bestandteil des Abgases, welcher während des Aufheizens des Katalysators (bei einer spezifischen Parameterkombination an einem Betriebspunkt) gebildet bzw. an die Umgebung abgegeben wird, für jede Parameterkombination eines Betriebspunktes, gemäß Gleichung 6:

$$R_{ABG} = m_{ABG, Ziel, KH} / m_{ABG, real, KH}. \qquad (6)$$

D. h. anhand von Gleichung 6 kann erfindungsgemäß für jeden (untersuchten) Betriebspunkt der Brennkraftmaschine eine Parameterkombination identifiziert werden, bei welcher die (reale) tatsächliche Masse $m_{ABG, real, KH}$ einzelner Bestandteile (CO, HC, NOx und nach Aufgabe weitere beliebige Emissionskomponenten) des Abgases, welche während des Aufheizens des Katalysators (bei einer spezifischen Parameterkombination) gebildet bzw. an die Umgebung abgegeben werden, unter den gegebenen Umständen ideal bzw. minimal ist. Natürlich kann dabei auch eine Summe der Bestandteile (CO, HC, NOx und nach Aufgabe weitere beliebige Emissionskomponenten) des Abgases, welche während des Aufheizens des Katalysators (bei einer spezifischen Parameterkombination) gebildet bzw. an die Umgebung abgegeben werden, betrachtet werden.

Weiterhin erfolgt erfindungsgemäß zum Auffinden eines klaren Parameteroptimums bzw. als weitere Grundlage für eine analytische und nachvollziehbare Auflösung des Zielkonflikts von Aufheizung vs. Rohemissionen neben dem zuvor beschriebenen Ranking hinsichtlich der einzelnen Bestandteile des Abgases, welche während des Aufheizens des Katalysators emittiert werden, ein Ranking hinsichtlich der thermischen Gegebenheiten ("thermisches Ranking"), d. h. in Bezug auf den bei der jeweiligen Parameterkombination bereitstehenden Abgaswärmestrom $dQ/dt_{ABG}$.

Hierzu erfolgt eine Gegenüberstellung des bei der jeweiligen Parameterkombination bereitstehenden Abgaswärmestroms $dQ/dt_{ABG}$, welcher eine Funktion der im Rahmen des Experiments variierten Parameter ist (ENW, ANW, ZZP) und des bzw. mit dem Abgaswärmestrom(s) $dQ/dt_{ABG, STD}$, welcher dann bereitsteht, wenn Standard/Optimalbedingungen vorliegen, also insbesondere wenn die Brennkraftmaschine mit einem optimalen Wirkungsgrad hinsichtlich des Kraftstoffverbrauchs betrieben wird bzw. liegen dann Standardbedingungen vor, wenn die Brennkraftmaschine anhand einer so genannten Serienbedatung betrieben wird (was vor allem die Parameter $ENW_{opt}$, $ANW_{opt}$ und $ZZP_{opt}$ betrifft) bzw. erfolgt zu diesem Zweck die Bildung eines Verhältnisses gemäß Gleichung 7:

$$R_{Therm} = dQ/dt_{ABG} (ENW, ANW, ZZP) / dQ/dt_{ABG, STD} (ENW_{opt}, ANW_{opt}, ZZP_{opt}). \qquad (7)$$

D. h. umso höher der aktuelle Abgaswärmemengenstrom der jeweiligen Parameterkombination ist, desto höher fällt das Ranking aus.

Erfindungsgemäß wird im weiteren Verlauf anhand der beiden Rankings ein Gesamtranking durchgeführt, wobei dabei eine Wichtung einzelner Betriebspunkte bzw. Betriebsbereiche der Brennkraftmaschine (Last/Drehzahl) erfolgen kann und ein Wichtungsfaktor eingesetzt wird, siehe Gleichung 8:

$$R_{Ges} = x * R_{ABG} + (1-x) * R_{Therm}, \qquad (8)$$

so dass ein höchstes Gesamtranking, d. h. der beste Kompromiss ermittelt werden kann. Der Wichtungsfaktor kann beispielsweise wie folgt definiert sein:

70% - 80% bei sehr kleinen Lasten/Drehzahlen während des Aufheizens des Katalysators,

$\approx$ 50% bei mittleren Lasten/Drehzahlen während des Aufheizens des Katalysators,

20% - 30% bei hohen Lasten/Drehzahlen während des Aufheizens des Katalysators.

Im Ergebnis wird anhand des Gesamtrankings gemäß Gleichung 8 die Parameterkombination ermittelt, welche ein klares Parameteroptimum repräsentiert, d. h. den Zielkonflikt von Aufheizung vs. Rohemissionen auf bestmögliche Weise löst, wobei anhand dieser Parameterkombination die Steuerung der Steuerzeiten der Einlass- und Auslassnockenwelle und des Zündzeitpunktes der Brennkraftmaschine erfolgt bzw. die entsprechenden Sollwert-Kennfelder (ANW, ENW, ZZP jeweils als Funktion der Drehzahl und Last/Luftfüllung) mit diesen Daten für eine Serienanwendung versehen werden.

Da jedoch bei einer Auswahl von wie zuvor beschrieben ermittelten optimalen Parameterkombinationen und einer darauf aufbauenden Einstellung der Steuerzeiten der Einlass- und Auslassnockenwelle der Brennkraftmaschine bzw. bei der Bedatung von SollKennfeldern im praktischen Betrieb der Brennkraftmaschine unzulässige, nicht umsetzbare (nicht "fahrbare") lokale Überschreitungen von Gradienten hinsichtlich der Verstellung bzw. der Verstellgeschwindigkeit der Einlass- bzw. Auslassnockenwelle (dENW/dt, dANW/dt) und hinsichtlich des Luftliefergrades (dLuftliefergrad/dt) resultieren können, erfolgt erfindungsgemäß darüber hinaus unter Einsatz eines geeigneten Optimierungsalgorithmus eine Prüfung, ob derartige Gradienten in den entstandenen Sollwert-Kennfeldern vorhanden sind bzw. in den Daten bzw. ausgewählten Parameterkombinationen, die wie zuvor beschrieben ermittelt wurden.

Hierzu werden während des Experiments (siehe oben) zusätzlich insbesondere während eines vergleichbar zum befeuerten Betrieb temperierten Schleppbetriebes bei Drehzahlen der Brennkraftmaschine, welche für die Aufheizung des Katalysators relevant sind, Sollwertsprünge der Steller der Nockenwellen (Einlass und Auslass) von spät nach früh und zurück durchgeführt, wobei auf diese Weise eine Bestimmung der drehzahl- und richtungsabhängigen realen Maximalgeschwindigkeiten (Gradienten) der Steuerzeiten erfolgt. Weiterhin wird ein vergleichbar zum befeuerten Betrieb temperierter Schleppbetrieb der Brennkraftmaschine bei Drehzahlen der Brennkraftmaschine durchgeführt, welche für die Aufheizung des Katalysators relevant sind, wobei Sollwertsprünge der Drosselklappe von minimaler Öffnung hin zu maximaler Öffnung durchgeführt werden, wobei auf diese Weise eine Bestimmung der drehzahl- und richtungsabhängigen realen Maximalgeschwindigkeiten (Gradienten) der (relativen Füllung) der Zylinder der Brennkraftmaschine erfolgt. Zusammengefasst wird somit die im Rahmen des Experiments entstehende bzw. entstandene Datenbasis erweitert und es können weitere Auswertungen/Berechnungen erfolgen.

Insbesondere erfolgt im weiteren Verlauf eine analytische Zusammenführung der Ergebnisse der wie beschrieben ermittelten drehzahl- und richtungsabhängigen realen Maximalgeschwindigkeiten (Gradienten) der Steuerzeiten und der drehzahl- und richtungsabhängigen realen Maximalgeschwindigkeiten (Gradienten) der (relativen) Füllung der Zylinder der Brennkraftmaschine zu Grenzgradienten dLuftliefergrad/dENW und dLuftliefergrad/dANW, welche durch die Brennkraftmaschine praktisch umsetzbar sind. D. h. es erfolgt insbesondere eine rechnerische Ermittlung des ENW-bzw. ANW-Luftliefergrad-Zusammenhangs aus dENW/dLuftliefergrad bzw. dANW/dLuftliefergrad = dENW : dLuftliefergrad/dt bzw. dANW/dt : dLuftliefergrad/dt.

Im weiteren Verlauf erfolgt dann ein Einsatz eines Optimierungsalgorithmus zur Prüfung, ob die Gradienten in den auf Basis des erfindungsgemäßen analytischen Vorgehens entstandenen (Soll-)Kennfeldern die leistbaren Grenzen überschreiten. Wenn dieser Fall vorliegt, wird mittels des verwendeten Algorithmus eine Parameterkombination über alle Betriebspunkte bestimmt, so dass die im finalen (Soll-)Kennfeld (bzw. in der jeweiligen Dreiergruppe ENW-ANW-ZZP, also in der jeweiligen Parameterkombination) verbleibende Rankingsumme $R_{Ges}$ maximal ist. Zur Verbesserung des repräsentativen Charakters des vom genannten Algorithmus optimierten Kennfelds bzw. der Gruppe von relevanten Kennfeldern können in der Datenbasis vor Einsatz des Optimierungsalgorithmus zum Beispiel die betriebspunktbezogenen Gesamtrankings $R_{ges}$ normiert werden. Das bedeutet, dass die Rankings $R_{ges}$ mit dem Durchschnittswert aller $R_{ges}$ des jeweiligen Betriebspunkts verrechnet werden, siehe Gleichung 9:

$$R_{ges,norm} = R_{ges} / (\Sigma R_{ges} / n_{Rges}) \qquad (9)$$

Somit wird in den zu befüllenden Sollkennfeldern verhindert, dass einzelne Betriebspunkte mit ihren ausgewählten optimalen Parameterkombinationen - ungeeigneterweise ausgedrückt in absoluten Rankings $R_{ges}$ - die jeweiligen Kennfeldtopographien und die Zielfunktion des Optimierungsalgorithmus, eine größtmögliche Summe an Rankings im Kennfeld zu erreichen, ungeeignet dominieren bzw. verzerren.

Mit anderen Worten erfolgt eine Ermittlung der den Untersuchungen/dem Experiment zugrundeliegenden Funktionen der Steuerung der Brennkraftmaschine bzw. der darin enthaltenen Parametrierung von realen bzw. repräsentativen Gradienten dLuftliefergrad/dENW und dLuftliefergrad/dANW, d. h. eine Analyse der Gradienten aus dem den Luftliefergrad physikalisch und parametrisch beschreibenden Modell in der elektronischen Motorsteuerung unter der Randbedingung, dass sowohl eine Version des Modells als auch dessen Parametrierung demjenigen Datensatz der Motorsteuerung bei Durchführung der Prüfstandsversuche entsprechen. Weiterhin erfolgt eine Zuordnung der motorischen Grenzgradienten und realen bzw. repräsentativen Gradienten dLuftliefergrad/dENW und dLuftliefergrad/dANW zu den betriebspunktabhängigen Parameterkombinationen sowie eine Zusammenführung der motorischen Ergebnisse bezüglich Parameter, Rankings (Zusammenführung der Rankings nach aufgaben/betriebspunktspezifischem Wichtungsschlüssel). Insbesondere erfolgt zusammengefasst eine Filterung der Ergebnisse auf Zulässigkeit, z. B. Einhaltung von Aussetzerfreiheit, Laufunruhegrenze, minimaler Abgastemperatur, Einhaltung der zulässigen Gradienten dLuftliefergrad/dENW und dLuftliefergrad/dANW und Auswahl der betriebspunktspezifischen optimalen Parametersets/Parameterkombinationen sowie die Zusammenstellung eines Satzes relevanter Sollwert-Betriebskennfelder für die einzelnen Parameter Einlassnockenwellenstellung, Auslassnockenwellenstellung, Zündzeitpunkt usw. aus den Optimalparametersets/-kombinationen der vermessenen Betriebspunkte und eine Interpolation und ggf. Extrapolation der o. g. Sollwert-Betriebskennfelder auf die in der Motorsteuerung vorgegebene Größe/Format und ein Export der korrekt bemessenen Sollwert-Betriebskennfelder in für den Import in die Motorsteuerungsparametrierung geeignetem Datenformat.

**Patentansprüche**

1. Verfahren zur Optimierung der Abgasnachbehandlung einer Brennkraftmaschine mit einem Katalysator und/oder Filter und einer Fremdzündung, wobei

 - ein Aufheizen des Katalysators durch einen Betrieb der Brennkraftmaschine in Betriebspunkten jeweils mit Parameterkombinationen hinsichtlich der Einstellung der Steuerzeiten der Einlass- und/oder Auslassventile und/oder eines Zündzeitpunktes erfolgt,
 - im Rahmen eines Experiments an Betriebspunkten der Brennkraftmaschine einer Vielzahl von Parameterkombinationen Messwerte betreffend zumindest die Abgaszusammensetzung, die Abgastemperatur und den Abgasmassenstrom zugeordnet werden, so dass eine Datenbasis bereitsteht,
 - auf Grundlage der Datenbasis je Betriebspunkt der Brennkraftmaschine eine erste Parameterkombination ermittelt wird, mit der im jeweiligen Betriebspunkt der Brennkraftmaschine beim Aufheizen des Katalysators eine minimale Masse an Abgas an die Umgebung abgegeben wird und weiterhin je Betriebspunkt der Brennkraftmaschine eine zweite Parameterkombination ermittelt wird, mit der zum Aufheizen des Katalysators eine maximale Wärmemenge im Abgas enthalten ist,
 - unter Berücksichtigung der ersten und der zweiten Parameterkombination derart eine Parameterkombination je Betriebspunkt der Brennkraftmaschine für einen praktischen Betrieb der Brennkraftmaschine außerhalb des Experiments ausgewählt wird, dass sowohl eine möglichst minimale Masse an Abgas an die Umgebung abgegeben wird, als auch zum Aufheizen des Katalysators eine möglichst maximale Wärmemenge im Abgas enthalten ist.

2. Verfahren nach Patentanspruch 1, wobei die erste Parameterkombination je Betriebspunkt der Brennkraftmaschine dadurch ermittelt wird, dass anhand des Abgasmassenstroms und der Abgastemperatur ein zum Aufheizen des Katalysators bereitstehender Wärmestrom ($dQ/dt_{ABG}$) und eine Wärmemenge ($Q_{LO}$) bestimmt wird, welche erforderlich ist, um den Katalysator zu aktivieren und anhand der Wärmemenge ($Q_{LO}$) die Zeit ($t_{KH}$) bestimmt wird, welche vom Start der Brennkraftmaschine bis zur Erreichung der Light-Off-Temperatur des Katalysators vergeht und anhand dieser Zeit ($t_{KH}$) sowie des Massenstroms des jeweiligen Abgasbestandteils ($dm_{ABG}/dt$) die während des Aufheizens des Katalysators an die Umwelt abgegebene Masse ($m_{ABG,\,real,\,KH}$) des jeweiligen Abgasbestandteils bestimmt wird, ein Ziel-Abgasmassenstrom ($dm_{ABG,\,Ziel}/dt$) der einzelnen Bestandteile des Abgases in Abhängigkeit von einem vorgegebenen Abgasgrenzwert ($Grenzwert_{ABG}$) der einem Abgastest zurückgelegten Wegstrecke ($Länge_{Abgastest}$) und der dabei vergehenden Zeit ($Zeit_{Abgastest}$) gebildet wird und daraus unter Berücksichtigung der Zeit ($t_{KH}$), welche vom Start der Brennkraftmaschine bis zur Erreichung der Light-Off-Temperatur des Katalysators vergeht, eine Ziel-Abgasmasse der einzelnen Bestandteile des Abgases ($m_{ABG,\,Ziel,\,KH}$) bestimmt wird, wobei je Betriebspunkt ein Ranking

$$R_{ABG} = m_{ABG,\,Ziel,\,KH} \,/\, m_{ABG,\,real,\,KH}$$

erfolgt, so dass je Betriebspunkt der Brennkraftmaschine eine Parameterkombination identifiziert werden kann, bei welcher die während des Aufheizens des Katalysators an die Umwelt abgegebene Masse ($m_{ABG,\,real,\,KH}$) minimal ist, wobei diese Parameterkombination der ersten Parameterkombination im betreffenden Betriebspunkt der Brennkraftmaschine entspricht.

3. Verfahren nach Patentanspruch 1, wobei die zweite Parameterkombination je Betriebspunkt der Brennkraftmaschine dadurch ermittelt wird, dass anhand des zum Aufheizen des Katalysators bereitstehenden Wärmestroms ($dQ/dt_{ABG}$) und eines Abgaswärmestroms ($dQ/dt_{ABG,\,STD}$), welcher dann bereitsteht, wenn die Brennkraftmaschine mit einem optimalen Wirkungsgrad betrieben wird, ein Ranking

$$R_{Therm} = dQ/dt_{ABG} \,/\, dQ/dt_{ABG,\,STD}$$

erfolgt, so dass je Betriebspunkt der Brennkraftmaschine eine Parameterkombination identifiziert werden kann, bei welcher der zum Aufheizen des Katalysators bereitstehende Wärmestrom ($dQ/dt_{ABG}$) maximal ist, wobei diese Parameterkombination der zweiten Parameterkombination im betreffenden Betriebspunkt der Brennkraftmaschine entspricht.

4. Verfahren nach Patentanspruch 2 und 3, wobei anhand der beiden Rankings ($R_{ABG}$, $R_{Therm}$) ein Gesamtranking

$$R_{Ges} = R_{ABG} + R_{Therm}$$

durchgeführt wird, so dass ein höchstes Gesamtranking ermittelt und in Abhängigkeit davon, derart eine Parameterkombination je Betriebspunkt der Brennkraftmaschine für einen Betrieb der Brennkraftmaschine ausgewählt wird, dass sowohl eine möglichst minimale Masse an Abgas an die Umgebung abgegeben wird, als auch zum Aufheizen des Katalysators eine möglichst maximale Wärmemenge im Abgas enthalten ist.

**5.** Verfahren nach Patentanspruch 4, wobei eine Wichtung einzelner Betriebspunkte oder Betriebsbereiche der Brennkraftmaschine erfolgt, wobei ein Wichtungsfaktor (x) eingesetzt wird, so dass sich

$$R_{Ges} = x * R_{ABG} + (1-x) * R_{Therm}$$

ergibt.

**6.** Verfahren nach Patentanspruch 5, wobei der Wichtungsfaktor:

- 70% - 80% bei sehr kleinen Lasten/Drehzahlen während des Aufheizens des Katalysators,
- ≈ 50% bei mittleren Lasten/Drehzahlen während des Aufheizens des Katalysators,
- 20% - 30% bei hohen Lasten/Drehzahlen während des Aufheizens des Katalysators beträgt.

**7.** Verfahren nach Patentanspruch 1 bis 6, wobei bei einer Auswahl von Parameterkombinationen für die darauf aufbauende Einstellung der Steuerzeiten der Einlass- und/oder Auslassventile im praktischen Betrieb der Brennkraftmaschine unzulässige, nicht umsetzbare lokale Überschreitungen von Gradienten hinsichtlich Verstellgeschwindigkeit der Einlass- und/oder Auslassnockenwelle und hinsichtlich des Luftliefergrades unter Einsatz eines Optimierungsalgorithmus erkannt und durch nächstbeste Parameterkombinationen desselben Betriebspunkts ersetzt werden, die dann keine solchen Überschreitungen verursachen.

**8.** Verfahren nach Patentanspruch 7, wobei zur Verbesserung des repräsentativen Charakters des von dem Optimierungsalgorithmus optimierten Kennfelds oder der Gruppe von relevanten Kennfeldern in der Datenbasis vor Einsatz des Optimierungsalgorithmus betriebspunktbezogene Gesamtrankings ($R_{ges}$) normiert werden, so dass diese Rankings ($R_{ges}$) mit dem Durchschnittswert aller Rankings ($R_{ges}$) des jeweiligen Betriebspunkts verrechnet werden und in zu befüllenden Kennfeldern verhindert wird, dass einzelne Betriebspunkte mit ihren ausgewählten optimalen Parameterkombinationen die jeweiligen Kennfeldtopographien und die Zielfunktion des Optimierungsalgorithmus, eine größtmögliche Summe an Rankings im Kennfeld zu erreichen, ungeeignet dominieren oder verzerren.

**9.** Vorrichtung die eingerichtet ist, ein Verfahren nach einem der Patentansprüche 1 bis 8 auszuführen.

Europäisches
Patentamt

European
Patent Office

Office européen
des brevets

# EUROPÄISCHER RECHERCHENBERICHT

**Nummer der Anmeldung**

EP 21 19 5318

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/275795 A1 (CYGAN JR GARY ROBERT [US] ET AL) 1. Oktober 2015 (2015-10-01) | 1-3,7-9 | INV. F02D13/02 F02D37/02 |
| A | * Absätze [0002], [0028] – [0030], [0056] – [0084], [0116] – [0124]; Abbildungen 1-3,5 * | 4-6 | F02D41/02 F02D41/14 F02D41/24 |
| | ----- | | |
| A | AT 518 677 A1 (AVL LIST GMBH [AT]) 15. Dezember 2017 (2017-12-15) * Seiten 2-7 * | 1,9 | |
| | ----- | | |
| A | EP 2 505 812 B1 (JIANG LI [US]; LEE DONGHOON [US] ET AL.) 18. Juni 2014 (2014-06-18) * Absätze [0034] – [0047]; Abbildungen 3-6 * | 1,9 | |
| | ----- | | |

**RECHERCHIERTE SACHGEBIETE (IPC)**

F02D

Der vorliegende Recherchenbericht wurde für alle Patentansprüche erstellt

| Recherchenort | Abschlußdatum der Recherche | Prüfer |
|---|---|---|
| Den Haag | 14. Januar 2022 | Deseau, Richard |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 19 5318

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2022

| Im Recherchenbericht angeführtes Patentdokument | Datum der Veröffentlichung | Mitglied(er) der Patentfamilie | Datum der Veröffentlichung |
|---|---|---|---|
| US 2015275795 A1 | 01-10-2015 | CN 104948306 A | 30-09-2015 |
| | | DE 102015104194 A1 | 01-10-2015 |
| | | US 2015275795 A1 | 01-10-2015 |
| AT 518677 A1 | 15-12-2017 | AT 518677 A1 | 15-12-2017 |
| | | WO 2017207463 A1 | 07-12-2017 |
| EP 2505812 B1 | 18-06-2014 | EP 2505811 A2 | 03-10-2012 |
| | | EP 2505812 A1 | 03-10-2012 |
| | | EP 2505813 A2 | 03-10-2012 |
| | | EP 2505814 A1 | 03-10-2012 |
| | | JP 6128743 B2 | 17-05-2017 |
| | | JP 6313871 B2 | 18-04-2018 |
| | | JP 2012215575 A | 08-11-2012 |
| | | JP 2017072611 A | 13-04-2017 |
| | | JP 2017072612 A | 13-04-2017 |
| | | JP 2017072613 A | 13-04-2017 |
| | | US 2012253634 A1 | 04-10-2012 |
| | | US 2012253635 A1 | 04-10-2012 |
| | | US 2012253636 A1 | 04-10-2012 |
| | | US 2012253637 A1 | 04-10-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4325503 C1
- DE 102004016386 B4
- DE 102005006490 B4
- DE 102005015999 A1